# EUROPEAN PATENT SPECIFICATION

(11) **EP 4 173 949 B1**
(45) Date of publication and mention of the grant of the patent: **04.12.2024**
(21) Application number: 21205724.4
(22) Date of filing: 29.10.2021
(51) Int. Cl.: B64C 27/78, B64C 27/82, F16B 37/14, F16B 39/08

(54) **CONTROL DEVICE FOR VARYING THE ANGLE OF ATTACK OF THE BLADES OF AN ANTI-TORQUE ROTOR FOR AN AIRCRAFT CAPABLE OF HOVERING**
STEUERUNGSVORRICHTUNG ZUR VERÄNDERUNG DES ANSTELLWINKELS DER BLÄTTER EINES HECKROTORS FÜR EIN SCHWEBFÄHIGES FLUGZEUG
DISPOSITIF DE COMMANDE POUR VARIER L'ANGLE D'ATTAQUE DES PALES D'UN ROTOR ANTICOUPLE POUR UN AÉRONEF CAPABLE D'EFFECTUER UN VOL STATIONNAIRE

(43) Date of publication of application: 03.05.2023
(73) Proprietor: Leonardo S.p.a., 00195 Roma (IT)
(72) Inventor: ANTONI, Andrea, 21017 SAMARATE (VA) (IT); VANNI, Roberto, 21017 SAMARATE (VA) (IT)
(74) Representative: Studio Torta S.p.A.

(56) References cited:
- EP-A1- 3 753 848
- US-A- 121 176
- US-A1- 2020 248 737

## Description

The present invention relates to a control device for varying the angle of attack of the blades of an anti-torque rotor for a helicopter.

Helicopters essentially comprising a fuselage, a main rotor placed at a top of the fuselage and rotatable around its own axis, and an anti-torque rotor arranged at a tail end of the fuselage are known.

Helicopters also comprise, in a known way, one or more motor members, for example turbines, and a transmission group interposed between the turbines and the main rotor and adapted to transmit the motion from the turbines to the main rotor itself.

In greater detail, the anti-torque rotor comprises, in turn:
- a control shaft rotatable around a first axis;
- a hub rotatable around the first axis; and
- a plurality of blades articulated on the hub, protruding cantilevered from the hub itself and each extending along respective second axes transverse to the first axis.

The drive shaft of the anti-torque rotor is driven into rotation by means of a series of gears driven by the main transmission group.

The blades of the anti-torque rotor rotate integrally with the drive shaft around the first axis and can be selectively inclined around the second axis, so that the respective angles of attack can be varied and the thrust exerted by the anti-torque rotor can be adjusted accordingly.

In order to adjust the angles of attack of the respective blades, the anti-torque rotors comprise:
- a control rod operatively connected to a pedalboard operable by the pilot by means of a mechanical or fly-by-wire connection, and sliding inside the control shaft along the first axis, but angularly fixed with respect to the first axis;
- a control element, also known as a "spider", rotatable integrally with the control shaft around the first axis and provided with a plurality of arms connected to respective blades in an eccentric position with respect to the relative second axes; and
- a rolling bearing mounted in a sliding manner with respect to the first axis, interposed between the rod and the control element, and configured so as to transmit an axial load from the rod to the rotatable element.

Specifically, the control rod comprises a first end along the first axis, near which the rolling bearing is mounted, and a second end opposite axially to the first one.

More particularly, the rolling bearing comprises, in turn:
- a radially external ring fixed on the control element;
- a radially internal ring fixed to the control rod; and
- a plurality of rolling bodies, which roll on respective tracks defined by the radially internal and external ring.

In detail, the radially internal ring comprises a third end along the first axis, which is arranged on the side of the first end of the control rod, and a fourth end, which is axially opposite to the third end.

In a normal operating condition of the bearing, the rolling bodies allow the rotation of the external ring with respect to the internal ring and the consequent rotation of the control element with respect to the rod.

The actuation of the pedalboard causes the control rod to slide parallel to the first axis. This sliding causes, by means of the rolling bearing, the sliding of the control element parallel to the first axis along a determined stroke.

This sliding causes the blades to rotate around the relative second axes, so as to vary the respective angles of attack by equal values associated with the determined stroke.

In order to ensure the correct fixing of the radially internal ring to the control rod, the radially internal ring must be constrained both axially and radially with respect to the first axis. In detail, it is necessary to prevent the axial displacement of the radially internal ring with respect to the control rod both in the direction oriented from the first end to the second end and in the opposite direction.

According to a solution of known type, the control rod comprises a shoulder and the radially internal ring is mounted so that the fourth end axially in abuts against this shoulder, so as to prevent the axial movement of the radially internal ring towards the second end.

According to this known solution, moreover, the control rod is threaded at the first end. The axial locking of the radially internal ring in the direction oriented from the second end to the first end is therefore obtained by screwing a threaded fixing element to the control rod, for example a nut, which is arranged so as to axially abut against the third end. In particular, the nut is tightened with a sufficient torque to ensure the axial preload required by the bearing.

The nut is a critical component for the operation of the entire helicopter, as the loss of the nut would make the radially internal ring free to slide axially with respect to the control rod towards the first end and therefore would make the anti-torque rotor substantially uncontrollable.

The Applicant has observed that the vibrations acting on the rolling bearing during use tend to cause a progressive accidental unscrewing of the nut and cause its axial slipping.

In order to solve this drawback, various known solutions have been proposed.

Firstly, in order to limit the effects of the vibrations on the nut, known solutions provide for the nut to be of the self-braking type.

In detail, the nut comprises a deformable portion at one of its axial ends, which is plastically deformed - in particular, ovalised - during its construction. This deformable portion increases the static friction between the nut and the control rod and therefore acts as a self-braking element of the nut.

In addition, the control rod is formed with one or more through holes transversely to the first axis and the nut is formed with one or more slots. The risk of unscrewing the nut is therefore further reduced by engaging a split pin at the same time through one of the slots in the nut and one of the holes of the control rod.

However, these solutions have room for improvement in terms of the reliability and maintainability of the axial locking of the rolling bearing.

In particular, since the used nut is of the self-braking type, it is necessary to use tightening torques greater than those sufficient to tighten a nut of the non-self-braking type. Secondly, due to the structural characteristics of the self-braking nuts, it is not possible to impart tightening torques equal to an exact value, but only variable ones within a range of values. Finally, the use of a self-braking nut corresponds to a higher starting torque value - i.e. the torque to be applied to the nut itself in order to overcome the static friction generated by the self-braking element - that is greater than that required in the case of nuts of different type. Greater starting torque values tend to make the maintenance phases of the control rod more difficult.

It should also be noted that a self-braking nut can be used for a limited number of tightening cycles. After a certain number of tightening cycles, the self-braking effect of the nut is in fact no longer guaranteed and it must be replaced.

The plastic deformation of the deformable portion of the nut also tends to damage the thread of the control rod and, in particular, cause it to deform. According to solutions of known type, once the tightening torque has been imparted and in order to allow the split pin to be installed, the split pin must be passed at the same time through a hole in the control rod and a slot in the nut. This is only possible if said hole and slot are substantially aligned with each other. Since the alignment condition between the hole and the slot is generally not verified at the end of the application of the tightening torque, a further rotation of the nut is normally necessary, generally in the screwing direction. This may cause the value of the total torque applied to the nut in the screwing direction to further increase.

The need is therefore felt in the sector to axially constrain the internal ring of the rolling bearing while ensuring reliability and ease of maintenance.

CN-A-106438637 describes a fixing system comprising a threaded rod, a nut and an anti-rotation tubular element. The nut comprises a threaded through hole and a first anti-rotation hole with a first anti-rotation portion. The tubular element comprises a second anti-rotation hole and a second anti-rotation portion. The second anti-rotation through hole comprises a third anti-rotation portion. The rod also comprises an external threaded portion and a fourth anti-rotation portion. The first and the second anti-rotation portion are coupled to prevent the rotation of the nut with respect to the tubular element. The third and the fourth anti-rotation portion are coupled to prevent the rotation of the tubular element relative to the rod, so as to make the tubular element and the nut angularly integral with each other.

EP 3753848 A1 discloses an anti-torque rotor comprising a mast rotatable about a first axis; a plurality of blades extending along respective second axes; a control element sliding along the first axis with respect to the mast, integrally rotatable with the mast, and connected to said blades; a control rod sliding axially along first axis and angularly fixed with respect to said first axis; a connection element interposed between the control rod and the control element, sliding along the first axis integrally with

the control rod, and configured to enable the relative rotation of said control element with respect to the control rod about the first axis; and a transmission unit available in an active configuration or an inactive configuration; the transmission unit, in turn, comprises: an annular ridge axially and angularly integral with the control rod and radially projecting from the control rod; and a seat engaged by the ridge and angularly integral with the control element.

US 2020/248737 A1 discloses a positive locking fastener comprising: a screw, a threaded portion of which has a blind hole and a groove; a nut having a tightening portion; a cap and a pin. The cap has an immobilizing portion intended to engage with the tightening portion and a locking portion intended to cooperate with the blind hole to prevent said cap from rotating relative to the screw. The locking portion also comprises openings suitable for allowing the pin to be inserted into said openings and into the groove in order to hold the screw and the cap together.

US 121176 A discloses the combined use of a cap to fit over the nut to be locked, and a key, pin, or screw, applied from the exterior so as to pass through said cap, and through, into, or against the screw-bolt, and thus prevent the nut from turning or working loose on the screw-bolt.

Aim of the present invention is to realize a control device for varying the angle of attack of the blades of the tail rotor of an aircraft capable of hovering, which enables at least one of the above requirements to be satisfied in a simple and economic manner.

The aforesaid purpose is achieved by the present invention, as it relates to a control device as defined in Claim 1.

Two preferred embodiments are described below for a better understanding of the present invention, provided by way of non-limiting example only with reference to the accompanying drawings, wherein:
- Figure 1 is a perspective view of a helicopter comprising a control device for varying the angle of attack of the blades of the anti-torque rotor according to the present invention;
- Figure 2 is a partial perspective view of the anti-torque rotor of Figure 1 on an enlarged scale;
- Figure 3 is a section view along the plane III-III of Figure 2;
- Figure 4 is a detail of the section of Figure 3 on an enlarged scale;
- Figure 5 is a detail of the section of Figure 4 on a further enlarged scale;
- Figure 6 is a section according to plane VI-VI of Figure 5 with parts removed for clarity's sake;
- Figures 7 and 8 are exploded and perspective views of a portion of the control device of Figures 1 to 6;
- Figure 9 is a perspective view of the portion of the control device shown in Figures 7 and 8; and
- Figure 10 is an exploded and perspective view of a portion of the control device according to an alternative embodiment.

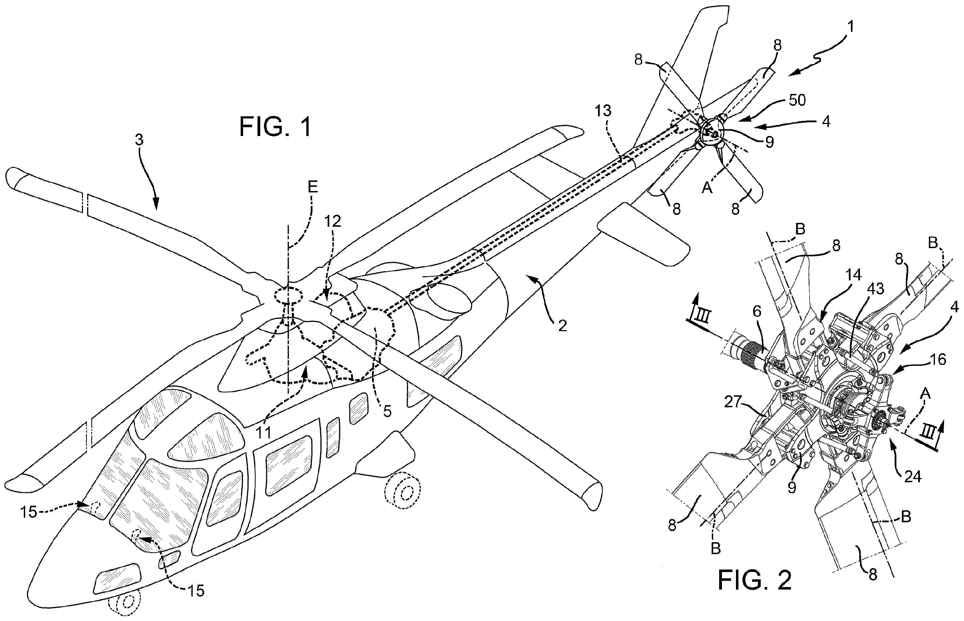

With reference to Figure 1, number 1 denotes in particular a helicopter essentially comprising:
- a fuselage 2;
- one or more turbines 5;
- a main rotor 3 placed at a top of the fuselage 2 and rotatable around an axis E; and
- an anti-torque rotor 4 placed at a tail end of the fuselage 2 and rotatable around its own axis A transversal to the axis E.

The helicopter 1 also comprises a transmission group 11, which transmits the motion from the turbines 5 to the main rotor 3.

The transmission group 11 comprises, in turn:
- a train 12 of gears, which transmit the motion from the turbine 5 to the rotor 3; and
- a shaft 13, which transmits the motion from train 12 to rotor 4.

In a known way, the rotor 3 is adapted to provide an orientable thrust which allows the helicopter 1 to be lifted and moved forward. Furthermore, the actuation of the rotor 3, in a known manner, generates a reaction torque around the axis E on the helicopter 1.

The rotor 4 generates a thrust parallel to the axis A, which causes a contrasting torque on the fuselage 2, which contrasts the reaction torque.

This contrasting torque is oriented in the opposite direction to the torque exerted on the rotor 3.

According to the thrust value generated by the rotor 4, it is therefore possible to orient the helicopter 1 according to a desired yaw angle around the axis E, or to vary the aforesaid yaw angle according to the manoeuvre to be performed.

With reference to Figures 2, 3 and 4, the rotor 4 essentially comprises:
- a drive shaft 6 rotatable around the axis A and operatively connected in a known manner to the shaft 13;
- a plurality of blades 8, in the case shown four in number, which extend cantilevered along respective axes B transverse to axis A; and
- a hub 9 fixed externally to a portion of the shaft 6, rotatable integrally with the shaft 6 around the axis A and on which the blades 8 are articulated.

More precisely, the blades 8 are articulated on the hub 9 so as to:
- be rotatable integrally with the hub 9 and with the shaft 6 around the axis A; and to
- be inclinable around the respective axes B by angles equal to each other and simultaneously over time, so as to vary the respective angles of attack.

In particular, the hub 9 comprises a plurality of attachment elements 27 radially projecting with respect to the axis A for the connection to respective blades 8. Each blade 8 also comprises a root portion 14 arranged radially internal with respect to the axis A and articulated on the relative attachment element 27 of the hub 9 (Figures 2, 3 and 4).

The rotor 4 further comprises a control device 50 for varying the angle of attack of the blades 8, that is, the angles of attack of the blades 8.

The helicopter 1 further comprises a flight control 15 (only schematically shown in Figure 1), for example a pedalboard, which can be operated by the pilot in order to permit the variation of the aforesaid angles of attack.

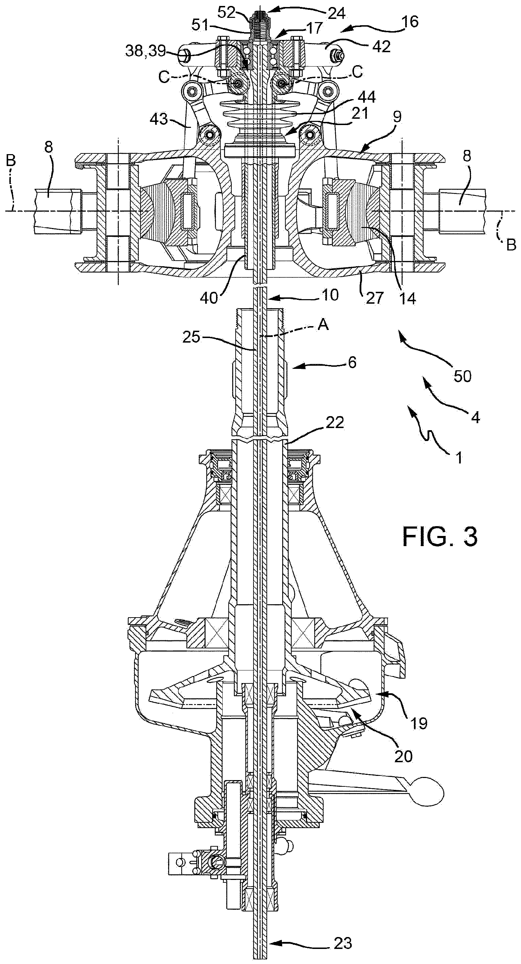

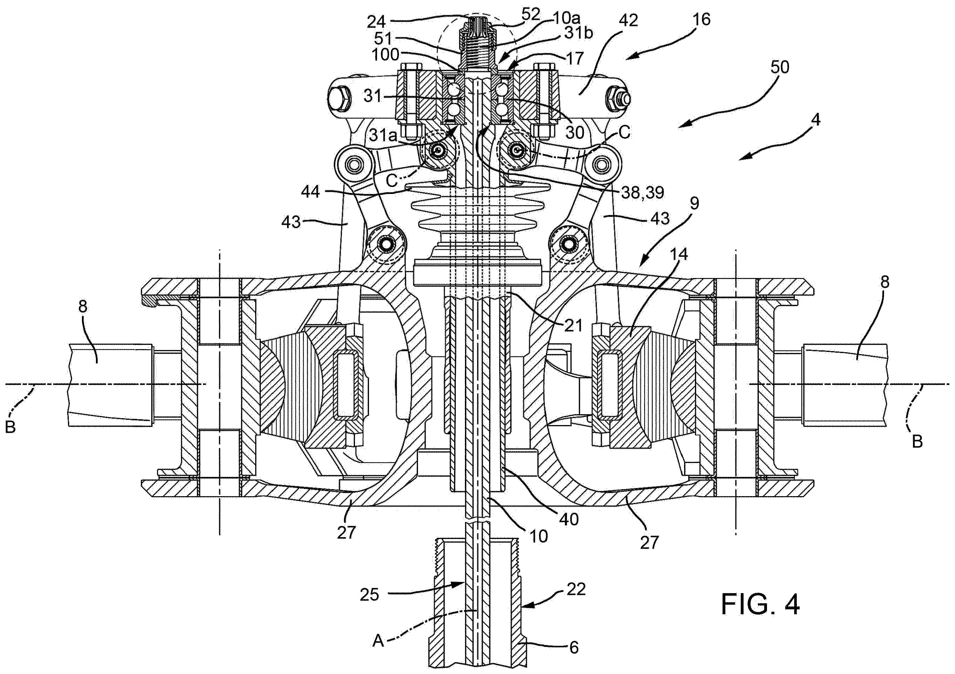

The control unit 50 comprises (Figures 3 and 4):
- a control rod 10 sliding parallel to axis A and operable by the flight control 15 through a mechanical connection or through a fly-by-wire mode;
- an element 16 rotatable integrally with the shaft 6 around the axis A and connected to the blades 8 eccentrically with respect to the relative axes B; and
- a bearing 17 sliding parallel to the axis A together with the rod 10 and interposed between the rod 10 itself and the element 16.

More particularly, the shaft 6 is hollow.

The shaft 6 further comprises (Figure 3):
- an axial end 20;
- an axial end 21 that is open and opposite the end 20; and
- a main portion 22 interposed between the axial ends 20, 21 and on which the hub 9 is keyed.

The main portion 22 further defines a flange 19 adapted to receive the motion from the shaft 13 (Figure 3) .

More particularly, the shaft 6 has a maximum diameter at the flange 19, and progressively decreasing diameters proceeding from the flange 19 towards the ends 20, 21.

The rod 10 is partially housed inside by shaft 6.

The rod 10 further comprises:
- one end 23;
- an axial end 24 opposite the end 23; and
- a main body 25 passing through the ends 20, 21 of the shaft 6.

The ends 23, 24 are arranged externally to the shaft 6 and on the side of the ends 20, 21, respectively.

The main body 25 is operatively connected to the flight control 15 by means of a lever mechanism (not shown) or by means of a wireless type drive.

The element 16 comprises, in turn:
- a tubular body 40 partly housed inside the shaft 6 and connected to the shaft 6 itself in a sliding manner with respect to the axis A, and partly housing the rod 10;
- a flange 42 extending orthogonally to the axis A and fixed to the tubular body 40 on the opposite side of the shaft 6; and
- a plurality of lever mechanisms 43 articulated on the flange 42 around respective axes C that are transversal to the axis A and articulated on respective blades 8 in an eccentric position with respect to the relative axes B.

The flange 42 and the bearing 17 are housed on the outside of the shaft 6 and surround the rod 10.

More precisely, the flange 42 and the bearing 17 are arranged on the opposite side of the end 20, 23 with respect to the ends 21, 24.

The flange 42 is connected to the shaft 6 by a single variable-length bellows 44, which allows it to slide along the axis A.

The lever mechanisms 43 are generally inclined with respect to the axis A and extend from the flange 42 towards the ends 20, 23.

The translation of the rod 10 along the axis A causes, by means of the bearing 17, the translation of the element 16.

As a result of the sliding of the element 16 along the axis A, the lever mechanisms 43 vary their inclination with respect to the axis A by the same mutually equal angles, causing the simultaneous rotation of the blades 8 around the respective axes B by the same mutually equal angles.

In particular, the lever mechanisms 43 are articulated on the root portions 14 of the respective blades 8.

The bearing 17 is capable of transmitting axial loads parallel to the axis A in both directions.

In other words, the bearing 17 is configured so that the translation of the rod 10 along the axis A in both directions causes the translation of the element 16 in the same directions.

The bearing 17 thus defines a transmission group, which connects the rod 10 and the element 16 in an axially integral and angularly movable manner with respect to the axis A.

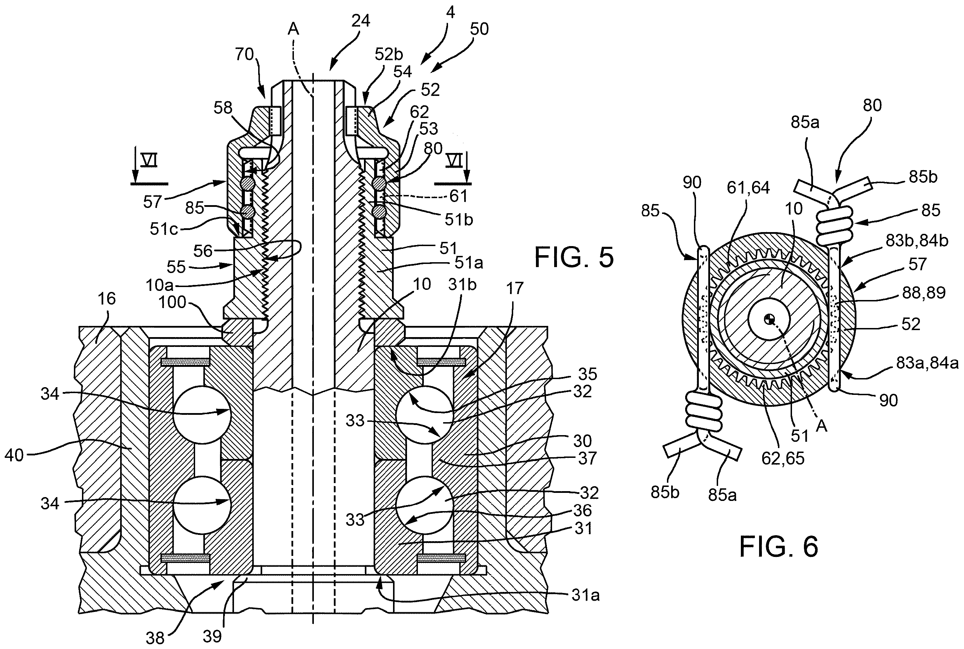

The bearing 17 comprises, in turn (Figure 5):
- an external ring 30 rotatable integrally with the element 16;
- an internal ring 31 sliding integrally with the rod 10; and
- a plurality of rolling bodies 32, in the case shown, a double row of balls, rolling on respective races 33, 34 defined by the respective rings 30, 31.

In the case shown, the ring 31 has a pair of axial end shoulders 35, 36 that are opposite each other, projecting radially towards the ring 30 and defining respective axial abutment surfaces for the rolling bodies 32. The rolling bodies 32 are, in particular, axially interposed between the shoulders 35, 36.

The ring 31 is furthermore made up of two half-rings that are arranged in contact axially the one against the other, in the case shown.

The ring 30 comprises a shoulder 37 interposed axially between the shoulders 35, 36, projecting radially towards the ring 31 and defining respective abutment surfaces for the rolling bodies 32. The shoulder 37 is axially interposed between the rolling elements 32 at a plane of symmetry of the bearing 17 radial to the axis A.

The external ring 30, moreover, is fixed on the tubular body 40 of the element 16 in a position that is radially internal to the axis A with respect to the flange 42.

The internal ring 31 is made integral with the control rod 10 by means of constraint conditions which act both axially and radially with respect to the axis A. In particular, the movement of the internal ring 31 with respect to the control rod 10 parallel to the axis A is prevented both in the direction oriented from the end 23 to the end 24, and in the opposite direction. In the case shown, the movement of the ring 31 with respect to the control rod 10 in the radial direction is prevented by an interference coupling.

As shown in Figure 5, the internal ring 31 comprises an axial end 31a, which is arranged on the side of the end 23, and an axial end 31b opposite the end 31a. The constraints preventing axial the displacement of the internal ring 31 with respect to the control rod 10 act at these axial ends 31a and 31b.

In greater detail, the control device 50 comprises an axial locking element 38, which cooperates with the axial end 31a and prevents the axial movement of the internal ring 31 in the direction oriented from the end 24 to the end 23. In the case shown, the control rod 10 comprises a shoulder 39, which defines the axial locking element 38. In further detail, the internal ring 31 axially abuts against the shoulder 39 at the axial end 31a (Figure 5).

The control rod 10 further comprises a threaded portion 10a and the control device 50 further comprises a threaded element 51, which is screwed onto the control rod 10 at the threaded portion 10a and cooperating with the axial end 31b (Figures 4 and 5). In this way, the axial constraint of the internal ring 31 is realized on the side of the axial end 31b.

The threaded element 51 is a cylindrical body mounted coaxially to the axis A and comprising a radially internal threaded portion 56 and a radially external portion 55 (Figure 5). In detail, the radially internal portion 56 is screwed onto the threaded portion 10a.

In the case shown, the threaded element 51 is a locking nut.

The threaded portion 10a, moreover, is obtained in proximity to the end 24 and, in particular, along an axial section of the control rod 10 extending from the side opposite the shoulder 39 with respect to the bearing 17.

Control device 50 comprises a bushing 52 coupled in an angularly and axially fixed manner to the threaded element 51 and in an angularly fixed manner to the control rod 10.

In particular, the bushing 52 is coupled in an angularly fixed manner to the control rod 10 independently of the threaded element 51. Therefore, even if the bushing 52 were not angularly fixed with respect to the threaded element 51, the bushing 52 could not rotate with respect to the control rod 10.

The bushing 52 constitutes an anti-unscrewing device of the threaded element 51 with respect to the control rod 10. In particular, during use, the bushing 52 exerts a contrasting action on the threaded element 51, which is the resultant of a plurality of forces and/or moments and which opposes the rotation of the threaded element 51 with respect to the control rod 10.

The bushing 52 is a cylindrical body mounted coaxially to the axis A on the side opposite the end 23 with respect to the threaded element 51. In addition, the bushing 52 comprises a radially internal portion 58 and a radially external portion 57. The bushing 52 further comprises an axial end 52a which is arranged on the side of the end 23 and an axial end 52b which is axially opposite to the end 52a (Figures 5 to 9).

More particularly, the bushing 52 comprises a cylindrical section 53 arranged on the side of the axial end 52a and a cylindrical section 54 arranged on the side of the axial end 52b. The cylindrical sections 53 and 54 are concentric to each other and superimposed the one above the other parallel to the axis A.

The cylindrical sections 53 and 54 have respective external diameters that are different from each other. In particular, the external diameter of the cylindrical section 53 is greater than that of the cylindrical section 54. Preferably, the axial extension of the cylindrical section 54 is smaller than that of the cylindrical section 53.

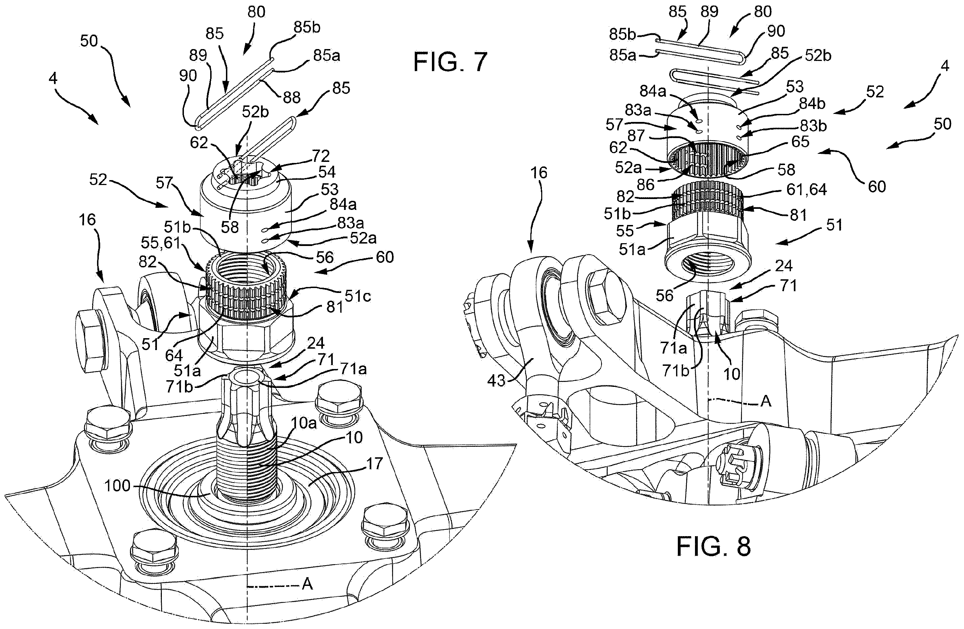

In detail, the bushing 52 is angularly coupled to the threaded element 51 by means of a shape coupling 60. To this end, the threaded element 51 comprises a profile 61 at the radially external portion 55 and the bushing 52 comprises a profile 62 that is complementary in shape to that of the profile 61 at the radially internal portion 58 (Figures 7, 8 and 10).

In the case shown, the profile 61 is a radially external grooved profile 61 and the profile 62 is a radially internal grooved profile 62. The radially external grooved profile 61 and the radially internal grooved profile 62 are such that they can be reversibly coupled to each other.

By way of example, the external and internal grooved profiles 61, 62 can be made by means of a broaching process.

Furthermore, the external and internal grooved profiles 61, 62 respectively comprise a plurality of teeth 64, 65, preferably straight parallel to the axis A. In addition, the number of teeth 64 and the number of teeth 65 are odd.

The meshing between the teeth 64 and the teeth 65 prevents the threaded element 51 and the bushing 52 from rotating the one with respect to the other.

The axial extension of the external and internal grooved profiles 61, 62, moreover, is related to the contrasting action that the bushing 52 exerts on the threaded element 51. In particular, the extent of the contrasting action increases as the axial extension of the external and internal grooved profiles 61, 62 increases.

In greater detail, the threaded element 51 comprises a cylindrical section 51a arranged on the side of the end 23 and a cylindrical section 51b arranged on the side of the end 24. The cylindrical sections 51a and 51b are concentric to each other and superimposed the one above the other parallel to the axis A.

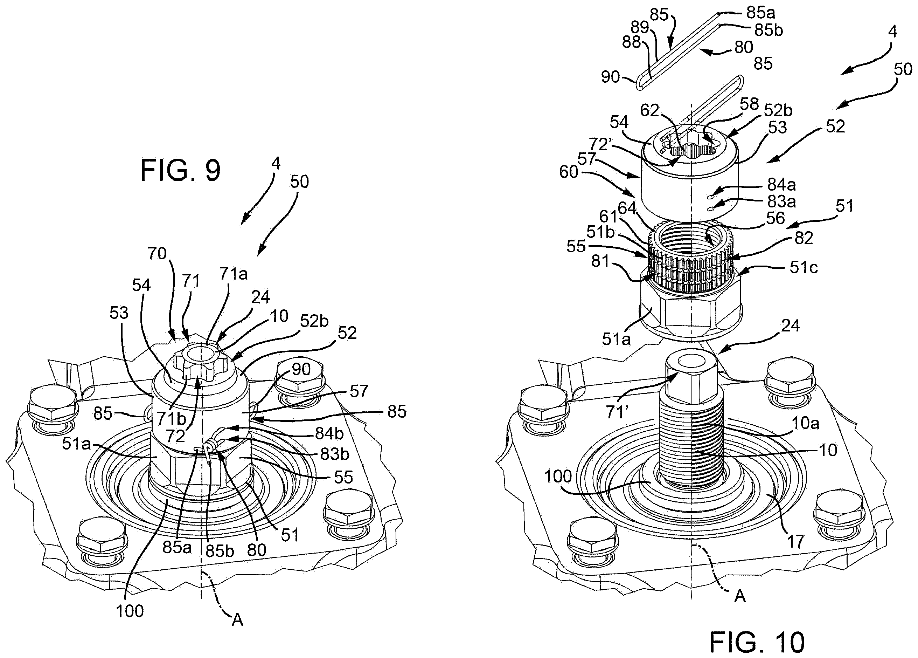

The cylindrical sections 51a and 51b have respective external diameters that are different from each other. In particular, the external diameter of the cylindrical section 51a is greater than that of the cylindrical section 51b (Figures 7, 8 and 10). Consequently, the threaded member 51 comprises a shoulder 51c at the longitudinal section of the threaded element 51 wherein the cylindrical section 51a joins the cylindrical section 51b. In the embodiment shown, the bushing 52 axially abuts against this shoulder 51c on the side of the axial end 52a (Figures 5 and 10).

As shown in Figures 7 and 8, the external grooved profile 61 extends at the cylindrical section 51b, preferably along its entire axial extension.

The cylindrical section 51a is preferably smooth at the radially external portion 55 and has a hexagonal or octagonal profile in a plane orthogonal to the axis A. The thread of the threaded element 51, moreover, extends along both the cylindrical sections 51a and 51b.

The internal grooved profile 62 extends along the cylindrical section 53, preferably along its entire axial extension (Figures 4 and 7).

In particular, the threaded element 51 is of the non-self-braking type.

As shown in Figure 9, the bushing 52 is angularly coupled to the control rod 10 by means of a shape coupling 70.

In detail, the control rod 10 comprises a polygonal profile 71, 71' and the bushing 52 comprises a polygonal profile 72, 72' and with a shape complementary to that of the profile 71, 71'. The profile 71, 71' and the profile 72, 72' define the shape coupling 70.

The profile 71, 71' is arranged at an internal diameter of the control rod 10 and the profile 72, 72' is arranged at the radially internal portion 58. In further detail, the profile 71, 71' extends near the end 24 and the profile 72, 72' extends near the axial end 52b. Preferably, the profile 71, 71' extends along an axial section of the control rod 10 starting from the end 24 and the profile 72, 72' extends along the entire cylindrical section 54 parallel to the axis A.

In the embodiment shown in Figure 7, in a plane perpendicular to the axis A, the profile 71 comprises an annular portion 71a concentric to the axis A and a plurality of elements 71b with prevalently axial development, projecting radially from the annular portion 71a and angularly equidistant to each other around the axis A. In particular, the elements 71b are teeth connected to the annular portion 71a, contiguous to each other and are six in number. In other words, the profile 71 has the shape of a six-pointed star in a section perpendicular to the axis A.

The profile 72 has a shape corresponding to that of the profile 71 and defines the perimeter of a through hole obtained at the axial end 52b and having an axis parallel to the axis A (Figure 7). In detail, the profile 72 is formed by a plurality of seats engaged by respective elements 71b.

According to an alternative embodiment shown in Figure 10, the profile 71' has a square shape in a plane orthogonal to the axis A and the profile 72' is shaped to engage the profile 71'.

As shown in Figures 7 to 10, the control device 50 comprises axial fixing means 80, which make the threaded element 51 and the bushing 52 axially integral.

The axial fixing means 80 constitute additional anti-unscrewing devices that are adapted to prevent the accidental unscrewing of the threaded element 51 from the threaded portion 10a.

In particular, the axial fixing means 80 comprise (Figure 10):
- two seats 81, 82 formed at the threaded element 51;
- two groups of openings 83a, 83b, 84a, 84b formed at the bushing 52;
- two groups of seats 86, 87 also obtained at the bushing 52; and
- two filiform deformable elements 85, which each engage the seats 81, 82, the openings 83a, 83b, 84a, 84b of one of the two groups of openings and the seats 86, 87 of one of the two groups of seats.

In the embodiment shown, the seats 81, 82 are arranged at the radially external portion 55. The seats 81, 82 are spaced apart parallel to the axis A and are preferably identical to each other (Figures 7, 8 and 10) .

More in detail, the seats 81 and 82 extend along the entire circumference of the radially external portion 55 on respective planes perpendicular to the axis A. Furthermore, the seats 81 and 82 are obtained at the cylindrical section 51b and in particular at the external grooved profile 61. More particularly, the seats 81 and 82 radially define a recess with respect to the head of the teeth 64.

The two groups of openings 83a, 83b, 84a, 84b are each obtained at respective distinct parts of the bushing 52. Preferably, the two groups of openings 83a, 83b, 84a, 84b are diametrically opposite to each other.

In the following, reference will be made to only one group of openings 83a, 83b, 84a, 84b and to only one filiform deformable element 85, the other group of openings and the other filiform deformable element being identical to those described.

In particular, the group of openings comprises two inlet openings 83a, 84a for the insertion of the filiform deformable element 85 and two outlet openings 83b, 84b for the exit of the filiform deformable element 85. In the case shown, the inlet openings 83a, 84a are aligned with each other parallel to the axis A and the same applies to the outlet openings 83b, 84b. In addition, the inlet opening 83a is aligned with the outlet opening 83b and the inlet opening 84a is aligned with the outlet opening 84b circumferentially with respect to the axis A.

The openings 83a, 83b, 84a, 84b, moreover, are obtained at the cylindrical section 53.

The two groups of seats 86, 87, which each comprise two seats, are also obtained at the cylindrical section 53 (Figure 8). Furthermore, the two seats 86, 87 of each group of seats are spaced apart parallel to the axis A and are preferably identical to each other. More in detail, the seats 86 and 87 of each pair of seats extend along a circular sector of the bushing 52.

Each seat 86 extends between an inlet opening 83a and the respective outlet opening 83b and each seat 87 extends between an inlet opening 84a and the respective outlet opening 84b.

In addition, the seats 86 and 87 are obtained at the internal groove profile 62. The seats 86 and 87 also radially define a recess with respect to the head of the teeth 65.

Preferably, the distance between a seat 86 and the relative seat 87 parallel to the axis A is equal to the axial distance between the seats 81 and 82 parallel to the axis A.

In addition, the seats 81, 82, 86 and 87 are shaped so as to house the filiform deformable element 85.

Figures 7, 8 and 10 show the filiform deformable element 85 in an initial configuration, i.e. before it is engaged with the threaded element 51 and the bushing 52. In detail, in this configuration the filiform deformable element 85 comprises two straight sections 88, 89 and parallel to each other and a curvilinear section 90, which joins the two straight sections 88, 89.

The filiform deformable element 85 also comprises two free ends 85a, 85b opposite each other, which are defined respectively by the straight sections 88 and 89 on the side opposite to the curvilinear section 90.

The filiform deformable element 85 is preferably made of metallic material and is, for example, a brake wire.

When the bushing 52 is engaged with the threaded element 51, the seats 81 and 82 are at least partially facing the seats 86 and 87 respectively and house respective portions of the filiform deformable element 85.

In the embodiment shown, the filiform deformable element 85 has a circular cross-section. Consequently, the seats 81, 82, 86 and 87 have an arc-shaped profile of a circumference in a plane passing through the axis A. Alternatively, the filiform deformable element 85 may have a cross section with shapes other than the circular one.

Figure 9 shows the filiform deformable element 85 in a final configuration, i.e. once the filiform deformable element 85 is engaged with the threaded element 51 and with the bushing 52. In detail, the straight section 88, which is placed on the side of the end 23, passes through the inlet opening 83a, engages the seats 81 and 86 and comes out from the outlet opening 83b; the straight section 89, which is placed on the side of the end 24, passes through the inlet opening 84a, engages the seats 82, 87 and comes out from the outlet opening 84b.

Thus, operationally each straight section 88, 89 is partially housed in the seats 81, 82, 86, 87 and partially outside these seats. In detail, the curvilinear section 90 and the free ends 85a, 85b are outside the seats 81, 82, 86, 87.

In more detail, the free ends 85a, 85b are plastically deformed so that they are twisted together and then fixed the one to the other. Consequently, the free ends 85a, 85b place the filiform deformable element 85 under traction and prevent the straight sections 88, 89 from being able to vary their distance parallel to the axis A during use.

Ultimately, when the filiform deformable element 85 is in the final configuration, the straight section 88 is interposed between two sections of the teeth 64 and two sections of the teeth 65 parallel to the axis A. Similarly, the straight section 89 is interposed between two sections of the teeth 64 and two sections of the teeth 65 parallel to the axis A. Therefore, as a consequence of the tensile stress to which the filiform deformable element 85 is subjected, the straight sections 88 and 89 exert respective actions parallel to the axis A and oriented towards the end 24 and towards the end 23, respectively.

The control device 50 also comprises a washer 100, which is fitted around the control rod 10 and axially interposed between the bearing 17 and the threaded element 51. In particular, the washer 100 axially abuts against the internal ring 31 at the end 31b and against the threaded element 51 on the side of the cylindrical section 51a.

The assembly steps that allow to achieve the axial locking of the internal ring 31 of the bearing 17 are described below.

The bearing 17 is fitted from the end 24 coaxially to the axis A and slid axially until the internal ring 31 abuts against the shoulder 39 at the axial end 31a.

Subsequently, the washer 100 is inserted, which is placed so as to abut against the axial end 31b.

The threaded element 51 is therefore also fitted around the control rod 10 from the end 24 and from the side of the cylindrical section 51a. The threaded element 51 is then rotated about the axis A, so that the radially internal portion 56 is screwed onto the threaded portion 10a. The threaded element 51 is progressively screwed - for example by means of a torque wrench - around the control rod 10 until it is tightened to the predetermined torque. In particular, in such a condition, the threaded element 51 abuts against the washer 100 on the side of the cylindrical section 51a.

The bushing 52 is then inserted from the end 24 so as to be axially stacked with the threaded element 51. In detail, during assembly, in order to allow the axial sliding of the bushing 52 in the direction oriented from the end 24 to the end 23, it is necessary that the shape coupling 60 and the shape coupling 70 are both geometrically respected. Therefore, it is necessary that profile 61 is correctly coupled to the profile 62 and that at the same time the profile 71, 71' is correctly coupled to the profile 72, 72'. In other words, the teeth 64 of the external grooved profile 61 must be angularly placed so as to be able to mesh correctly with the teeth 65 of the internal grooved profile 62 and at the same time, the elements 71b must be able to engage the corresponding seats of the profile 72 or that the square-shaped profile 71' can geometrically engage the profile 72'.

Once these couplings are respected, it is possible to slide the bushing 52 parallel to the axis A, until the axial end 52a abuts against the shoulder 39 of the control rod 10.

In this condition, the bushing 52 is angularly fixed with respect to the threaded element 51 and with respect to the control rod 10.

At this point, each filiform deformable element 85 is inserted partly into the seats 81, 86 and partly into the seats 82, 87, and deformed at its free ends 85a, 85b which come out from the seats 81, 82, 86, 87, in order to prevent the relative axial displacement between the threaded element 51 and the bushing 52 (Figure 6). In detail, the straight section 88 is inserted from the free end 85a through the inlet opening 83a into the seats 81 and 86 until it partially comes out from the outlet opening 83b; at the same time, the straight section 89 is inserted from the free end 85b through the inlet opening 84a into the seats 82, 87 until it partially comes out from the outlet opening 84b. The free ends 85a and 85b are then twisted together so that they are fixed the one to the other.

In use, the actuation of the rotor 4 results in the rotation of the shaft 6 and of the hub 9 around the axis A and, consequently, the generation of the contrasting torque on the fuselage 2.

The rotation of the rotor 4 causes vibrations to be triggered, which are transmitted to the threaded element 51 through the control rod 10 and which tend to unscrew the threaded element 51 itself from the threaded portion 10a.

The unscrewing of the threaded element 51 with respect to the control rod 10 is contrasted by the bushing 52.

In particular, the bushing 52 is angularly integral with the threaded element 51 by means of the shape coupling 60 and the control rod 10 by means of the shape coupling 70. Therefore, the rotation of the threaded element 51 about the axis A is prevented by the fact that the bushing 52 cannot rotate with respect to the control rod 10.

At the same time, the relative movement of the bushing 52 with respect to the threaded element 51 parallel to the axis A is prevented by the axial fixing means 80.

In particular, the filiform deformable elements 85, which are housed in the seats 81, 82 and in the seats 86, 87, exert on the threaded element 51 and on the bushing 52 actions directed parallel to the axis A, which oppose the distancing between the bushing 52 and the threaded element 51.

Examining the characteristics of the control device 50 according to the present invention, the advantages which it allows to obtain are evident.

In particular, the bushing 52 is angularly and axially fixed to the threaded element 51 and is angularly fixed to the control rod 10. Thus, the axial displacement of the radial internal ring 31 with respect to the control rod 10 can be reliably and efficiently limited.

In fact, the unscrewing of the threaded element 51 is prevented by the bushing 52.

Therefore, differently from what is envisaged in known solutions discussed in the introductory part of this description, it is not necessary that the threaded element 51 is of the self-braking type or that it must be subjected to a plastic deformation. This allows the disadvantages that characterise such known solutions to be avoided.

In particular, the absence of plastic deformation of the threaded element 51 allows damages to the threaded portion 10a to be limited.

The use of a threaded element 51 which is not of the self-braking type also allows to impart and maintain a tightening torque with a defined and non-variable value within a range of values. In addition, again for the same reason, it is possible to tighten the threaded element 51 with a tightening torque having a value lower than the tightening torques used in the case of self-braking nuts and consequently, to obtain lower values of the total torque.

In addition, under a correct operating condition, the threaded element 51 can be used for a much greater number of tightening cycles than that allowed by the self-braking nuts.

Finally, depending on the dimensions and performance of the rotor 4, and thus on the extreme values of the contrasting torque and the vibrational regime that it must withstand, it is also possible to selectively modulate the coupling between the bushing 52 and the respective threaded element 51, so that the unscrewing of the latter with respect to the control rod 10 is effectively contrasted by the bushing 52. In other words, a greater or lesser development length along the axis A of the plurality of teeth 64, 65 on the external and internal grooved profile 61, 62, causes a greater or lesser action against the aforementioned unscrewing by virtue of a greater or smaller contact surface between the operatively coupled teeth 64, 65.

A similar concept can be applied when considering the profile 71, 71' of the control rod and the profile 72, 72' of the bushing 52. Since the control rod 10 comprises the profile 71, 71' and the bushing 52 comprises the profile 72, 72' and since both said profiles 71, 71', 72, 72' are polygonal, the bushing 52 can be coupled to the control rod 10 for a discrete number of angular positions with respect to the axis A.

Finally, it is clear that modifications and variations can be made to the control device 50 described and shown herein, the scope of protection being defined by the appended claims.

In particular, the axial locking element 38 could comprise an elastic stop ring, for example a Seeger ring.

The profiles 71, 71'; 72, 72', moreover, may be shaped differently, i.e. have complementary shapes other than those shown in Figures 7 and 10. In detail, the profile 71 could comprise a number of elements 71b other than six.

The filiform deformable element 85 may be different from a brake wire. For example, the filiform deformable element 85 may be a split pin.

## Claims

1. Control device (50) for controlling the variation of the angle of attack of the blades (8) of an anti-torque rotor (4) for an aircraft (1) capable of hovering, comprising:
- a control element (16) sliding along a first axis (A) with respect to a shaft (6) of said anti-torque rotor (4) and rotatable integrally with said shaft (6); said control element (16), moreover, being operatively connected to a plurality of said blades (8) articulated on said shaft (6) in order to cause, in use, their rotation around respective second axes (B) following a translation of said element (16) itself along said first axis (A);
- a control rod (10) axially sliding along said first axis (A) with respect to said shaft (6) and angularly fixed with respect to said first axis (A); and
- a rolling bearing (17) interposed between said control rod (10) and said control element (16), sliding along said first axis (A) with respect to said shaft (6) and integrally with said control rod (10), and configured to allow the relative rotation of said control element (16) with respect to said control rod (10) about said first axis (A);
said rolling bearing (17) comprising, in turn:
- a first ring (30) that is rotatable integrally with said control element (16) about said first axis (A) ;
- a second ring (31) radially internal to said first ring (30) with respect to said first axis (A) and sliding integrally with said control rod (10) along said first axis (A); and
- a plurality of rolling bodies (32), which are interposed between said first and second rings (30, 31) and adapted to roll on respective tracks (33, 34) of said first and second rings (30, 31);
said control device (50) further comprising a threaded element (51) screwed onto said control rod (10) and cooperating with said second ring (31) to constrain it axially with respect to said control rod (10);
said control device (50) further comprising:
- a bushing (52) coupled in an angularly and axially fixed manner to said threaded element (51), and in an angularly fixed manner to said control rod (10);
- axial fixing means (80) adapted to fix said threaded element (51) and said bushing (52) to each other, so as to prevent their relative movements parallel to said first axis (A);
said threaded element (51) comprising a first radially external portion (55) and a first radially internal portion (56) with respect to said first axis (A) and said bushing (52) comprising a second radially external portion (57) and a second radially internal portion (58);
**characterized in that** said axial fixing means (80) comprise:
- at least one first seat (81, 82), which is formed at said threaded element (51);
- a plurality of openings (83a, 83b, 84a, 84b) formed at said bushing (52);
- at least one second seat (86, 87) obtained at said bushing (52) and at least partially facing said at least one first seat (81, 82); and
- a filiform deformable element (85), which engages said first and second seats (81, 82; 86, 87) and said openings (83a, 83b, 84a, 84b);
wherein said at least one first seat (81, 82) extends along the entire circumference of said first radially external portion (55) on a plane perpendicular to said first axis (A).

2. Control device according to Claim 1, **characterized in that** it comprises:
- first connecting means (60) adapted to connect said bushing (52) to said threaded element (51); and
- second connecting means (70) distinct from said first connecting means (60) and adapted to connect said bushing (52) to said control rod (10).

3. Control device according to Claim 2, **characterized in that** said first connecting means (60) comprise a shape coupling (60).

4. Control device according to Claim 3, **characterized in that** said threaded element (51) comprises an external grooved profile (61) at said first radially external portion (55) and said bushing (52) comprises an internal grooved profile (62) at said second radially internal portion (58); said external grooved profile (61) and said internal grooved profile (62) being coupled together and defining said shape coupling (60).

5. Control device according to Claim 4, **characterized in that** said external grooved profile (61) and said internal grooved profile (62) each comprise an odd number of teeth (64, 65).

6. Control device according to Claim 4 or 5, **characterized in that** said external grooved profile (61) and said internal grooved profile (62) have respective axial extensions parallel to said first axis (A);
said bushing (52) exerting, in use, a contrasting action on said threaded element (51);
said contrasting action being a resultant of forces and/or moments having a direction opposing the rotation of the threaded element (51) about said first axis (A) and having a modulus proportional to said axial extensions.

7. Control device according to any one of Claims 2 to 6, **characterized in that** said second connecting means (70) comprise a further shape coupling (70).

8. Control device according to Claim 7, **characterized in that** said control rod (10) comprises a first polygonal profile (71, 71') and said bushing (52) comprises a second polygonal profile (72, 72') with a shape corresponding to said first polygonal profile (71, 71');
said first polygonal profile (71, 71') and said second polygonal profile (72, 72') being coupled together and defining said further shape coupling (70).

9. Control device according to any one of the foregoing claims, **characterized in that** said filiform deformable element (85) is made of metallic material.

10. Control device according to any one of the preceding Claims, **characterized in that** said threaded element (51) is of a non-self-braking type.

11. Control device according to any one of the preceding Claims, **characterized in that** it comprises a washer (100), which is fitted around said control rod (10) and is interposed between said rolling bearing (17) and said threaded element (51) parallel to said first axis (A).

12. Anti-torque rotor (4) for an aircraft (1) capable of hovering, comprising:
- a shaft (6) rotatable about a first axis (A);
- a plurality of blades (8) articulated on said shaft (6), extending along respective second axes (B) transverse to said first axis (A) and rotatable about respective said second axes (B) to vary respective angles of attack; and
- a control device (50) according to any one of the preceding claims.

13. Aircraft (1) capable of hovering, in particular a helicopter (1), comprising:
- a fuselage (2);
- a main rotor (3); and
- an anti-torque rotor (4) according to Claim 12.

## Patentansprüche

1. Steuervorrichtung (50) zum Steuern der Änderung des Anstellwinkels der Blätter (8) eines Drehmomentausgleichsrotors (4) für ein Luftfahrzeug (1), das schweben kann, die Folgendes umfasst:
- ein Steuerelement (16), das entlang einer ersten Achse (A) in Bezug auf eine Welle (6) des Drehmomentausgleichsrotors (4) gleitet und mit der Welle (6) drehfest verbunden ist; wobei das Steuerelement (16) außerdem mit mehreren der Blätter (8), die an der Welle (6) angelenkt sind, betriebstechnisch verbunden ist, um im Gebrauch ihre Drehung um jeweilige zweite Achsen (B) einer Translation des Elements (16) selbst entlang der ersten Achse (A) folgend zu bewirken;
- einen Steuerstab (10), der entlang der ersten Achse (A) in Bezug auf die Welle (6) axial gleitet und in Bezug auf die erste Achse (A) drehfest ist; und
- ein Wälzlager (17), das zwischen dem Steuerstab (10) und dem Steuerelement (16) eingefügt ist, entlang der ersten Achse (A) in Bezug auf die Welle (6) und einteilig mit dem Steuerstab (10) gleitet und konfiguriert ist, die relative Drehung des Steuerelements (16) in Bezug auf den Steuerstab (10) um die erste Achse (A) zu ermöglichen;
wobei das Wälzlager (17) seinerseits Folgendes umfasst:
- einen ersten Ring (30), der mit dem Steuerelement (16) einteilig um die erste Achse (A) drehbar ist;
- einen zweiten Ring (31), der sich in Bezug auf die erste Achse (A) radial innerhalb des ersten Rings (30) befindet und mit dem Steuerstab (10) einteilig entlang der ersten Achse (A) gleitet; und
- mehrere Wälzkörper (32), die zwischen dem ersten und dem zweiten Ring (30, 31) eingefügt sind und ausgelegt sind, auf jeweiligen Bahnen (33, 34) des ersten und des zweiten Rings (30, 31) zu rollen;
wobei die Steuervorrichtung (50) ferner ein Gewindeelement (51) umfasst, das auf den Steuerstab (10) geschraubt ist und mit dem zweiten Ring (31) zusammenwirkt, derart, dass er in Bezug auf den Steuerstab (10) axial eingeschränkt ist;
wobei die Steuervorrichtung (50) ferner Folgendes umfasst:
- eine Buchse (52), die auf eine drehfeste und axial feststehende Weise mit dem Gewindeelement (51) und auf eine drehfeste Weise mit dem Steuerstab (10) gekoppelt ist;
- axiale Befestigungsmittel (80), die ausgelegt sind, das Gewindeelement (51) und die Buchse (52) aneinander zu befestigen, um ihre relativen Bewegungen parallel zur ersten Achse (A) zu verhindern;
wobei das Gewindeelement (51) einen ersten radial äußeren Abschnitt (55) und einen ersten radial inneren Abschnitt (56) in Bezug auf die erste Achse (A) umfasst und die Buchse (52) einen zweiten radial äußeren Abschnitt (57) und einen zweiten radial inneren Abschnitt (58) umfasst;
**dadurch gekennzeichnet, dass** die axialen Befestigungsmittel (80) Folgendes umfassen:
- mindestens einen ersten Sitz (81, 82), der am Gewindeelement (51) gebildet ist;
- mehrere Öffnungen (83a, 83b, 84a, 84b), die an der Buchse (52) gebildet sind;
- mindestens einen zweiten Sitz (86, 87), der an der Buchse (52) erhalten wird und zumindest teilweise dem mindestens einen ersten Sitz (81, 82) zugewandt ist; und
- ein fadenförmiges, verformbares Element (85), das sich mit dem ersten und dem zweiten Sitz (81, 82; 86, 87) und den Öffnungen (83a, 83b, 84a, 84b) in Eingriff befindet;
wobei sich der mindestens eine erste Sitz (81, 82) entlang des gesamten Umfangs des ersten radial äußeren Abschnitts (55) auf einer Ebene erstreckt, die zur ersten Achse (A) senkrecht ist.

2. Steuervorrichtung nach Anspruch 1, **dadurch gekennzeichnet, dass** sie Folgendes umfasst:
- erste Verbindungsmittel (60), die ausgelegt sind, die Buchse (52) mit dem Gewindeelement (51) zu verbinden; und
- zweite Verbindungsmittel (70), die von den ersten Verbindungsmitteln (60) verschieden sind und ausgelegt sind, die Buchse (52) mit dem Steuerstab (10) zu verbinden.

3. Steuervorrichtung nach Anspruch 2, **dadurch gekennzeichnet, dass** die ersten Verbindungsmittel (60) eine formschlüssige Verbindung (60) umfassen.

4. Steuervorrichtung nach Anspruch 3, **dadurch gekennzeichnet, dass** das Gewindeelement (51) am ersten radial äußeren Abschnitt (55) ein außen gekerbtes Profil (61) umfasst und die Buchse (52) am zweiten radial inneren Abschnitt (58) ein innen gekerbtes Profil (62) umfasst; wobei das außen gekerbte Profil (61) und das innen gekerbte Profil (62) miteinander gekoppelt sind und die formschlüssige Verbindung (60) definieren.

5. Steuervorrichtung nach Anspruch 4, **dadurch gekennzeichnet, dass** das außen gekerbte Profil (61) und das innen gekerbte Profil (62) jeweils eine ungerade Anzahl von Zähnen (64, 65) umfassen.

6. Steuervorrichtung nach Anspruch 4 oder 5, **dadurch gekennzeichnet, dass** das außen gekerbte Profil (61) und das innen gekerbte Profil (62) jeweilige axiale Verlängerungen parallel zur ersten Achse (A) aufweisen;
wobei die Buchse (52) im Gebrauch eine Gegenwirkung auf das Gewindeelement (51) ausübt;
wobei die Gegenwirkung eine Resultierende von Kräften und/oder Momenten ist, die eine Richtung entgegengesetzt zur Drehung des Gewindeelements (51) um die erste Achse (A) aufweisen und ein Modul aufweisen, das zu den axialen Verlängerungen proportional ist.

7. Steuervorrichtung nach einem der Ansprüche 2 bis 6, **dadurch gekennzeichnet, dass** die zweiten Verbindungsmittel (70) eine weitere formschlüssige Verbindung (70) umfassen.

8. Steuervorrichtung nach Anspruch 7, **dadurch gekennzeichnet, dass** der Steuerstab (10) ein erstes polygonales Profil (71, 71') umfasst und die Buchse (52) ein zweites polygonales Profil (72, 72') mit einer Form, die dem ersten polygonalen Profil (71, 71') entspricht, umfasst;
wobei das erste polygonale Profil (71, 71') und das zweite polygonale Profil (72, 72') miteinander gekoppelt sind und die weitere formschlüssige Verbindung (70) definieren.

9. Steuervorrichtung nach einem der vorhergehenden Ansprüche, **dadurch gekennzeichnet, dass** das fadenförmige, verformbare Element (85) aus einem metallischen Material hergestellt ist.

10. Steuervorrichtung nach einem der vorhergehenden Ansprüche, **dadurch gekennzeichnet, dass** das Gewindeelement (51) ein nicht selbstbremsender Typ ist.

11. Steuervorrichtung nach einem der vorhergehenden Ansprüche, **dadurch gekennzeichnet, dass** sie eine Scheibe (100) umfasst, die um den Steuerstab (10) eingepasst ist und zwischen dem Wälzlager (17) und dem Gewindeelement (51) parallel zur ersten Achse (A) eingefügt ist.

12. Drehmomentausgleichsrotor (4) für ein schwebfähiges Luftfahrzeug (1), der Folgendes umfasst:
- eine Welle (6), die um eine erste Achse (A) drehbar ist;
- mehrere Blätter (8), die an der Welle (6) angelenkt sind, sich entlang jeweiliger zweiter Achsen (B) transversal zur ersten Achse (A) erstrecken und um die jeweiligen zweiten Achsen (B) drehbar sind, um jeweilige Anstellwinkel zu verändern; und
- eine Steuervorrichtung (50) nach einem der vorhergehenden Ansprüche.

13. Schwebfähiges Luftfahrzeug (1), insbesondere Helikopter (1), das Folgendes umfasst:
- einen Rumpf (2);
- einen Hauptrotor (3); und
- einen Drehmomentausgleichsrotor (4) nach Anspruch 12.

## Revendications

1. Dispositif de commande (50) pour commander la variation de l'angle d'attaque des pales (8) d'un rotor anti-couple (4) pour un aéronef (1) capable d'effectuer un vol stationnaire, comprenant :
un élément de commande (16) coulissant le long d'un premier axe (A) par rapport à un arbre (6) dudit rotor anti-couple (4) et pouvant tourner de manière solidaire avec ledit arbre (6) ; ledit élément de commande (16) étant, de plus, raccordé de manière opérationnelle à une pluralité desdites pales (8) articulées sur ledit arbre (6) afin de provoquer, à l'usage, leur rotation autour des seconds axes (B) respectifs suite à une translation dudit élément (16) lui-même le long dudit premier axe (A) ;
une tige de commande (10) coulissant, de manière axiale, le long dudit premier axe (A) par rapport audit arbre (6) et fixe, de manière angulaire, par rapport audit premier axe (A) ; et
un palier à roulement (17) intercalé entre ladite tige de commande (10) et ledit élément de commande (16), coulissant le long dudit premier axe (A) par rapport audit arbre (6) et de manière solidaire avec ladite tige de commande (10), et configuré pour permettre la rotation relative dudit élément de commande (16) par rapport à ladite tige de commande (10) autour duit premier axe (A) ;
ledit palier à roulement (17) comprenant à son tour :
une première bague (30) qui peut tourner, de manière solidaire, avec ledit élément de commande (16) autour dudit premier axe (A) ;
une seconde bague (31) radialement interne à ladite première bague (30) par rapport audit premier axe (A) et coulissant, de manière solidaire, avec ladite tige de commande (10) le long dudit premier axe (A) ; et
une pluralité de corps de roulement (32), qui sont intercalés entre lesdites première et seconde bagues (30, 31) et adaptés pour rouler sur des pistes (33, 34) respectives desdites première et seconde bagues (30, 31) ;
ledit dispositif de commande (50) comprenant en outre un élément fileté (51) vissé sur ladite tige de commande (10) et coopérant avec ladite seconde bague (31) pour la contraindre axialement par rapport à ladite tige de commande (10) ;
ledit dispositif de commande (50) comprenant en outre :
une douille (52) couplée d'une manière angulairement et axialement fixe audit élément fileté (51), et d'une manière angulairement fixe à ladite tige de commande (10) ;
des moyens de fixation axiaux (80) adaptés pour fixer ledit élément fileté (51) et ladite douille (52) entre eux, afin d'empêcher leurs mouvements relatifs parallèles audit premier axe (A) ;
ledit élément fileté (51) comprenant une première partie radialement externe (55) et une première partie radialement interne (56) par rapport audit premier axe (A) et ladite douille (52) comprenant une seconde partie radialement externe (57) et une seconde partie radialement interne (58) ;
**caractérisé en ce que** lesdits moyens de fixation axiaux (80) comprennent :
au moins un premier siège (81, 82) qui est formé au niveau dudit élément fileté (51) ;
une pluralité d'ouvertures (83a, 83b, 84a, 84b) formées au niveau de ladite douille (52) ;
au moins un second siège (86, 87) obtenu au niveau de ladite douille (52) et faisant au moins partiellement face audit au moins un premier siège (81, 82) ; et
un élément déformable filiforme (85), qui met en prise lesdits premier et second sièges (81, 82 ; 86, 87) et lesdites ouvertures (83a, 83b, 84a, 84b) ;
dans lequel ledit au moins un premier siège (81, 82) s'étend le long de toute la circonférence de ladite première partie radialement externe (55) sur un plan perpendiculaire audit premier axe (A).

2. Dispositif de commande selon la revendication 1, **caractérisé en ce qu'**il comprend :
des premiers moyens de raccordement (60) adaptés pour raccorder ladite douille (52) audit élément fileté (51) ; et
des seconds moyens de raccordement (70) distincts desdits premiers moyens de raccordement (60) et adaptés pour raccorder ladite douille (52) à ladite tige de commande (10).

3. Dispositif de commande selon la revendication 2, **caractérisé en ce que** lesdits premiers moyens de raccordement (60) comprennent un couplage de forme (60).

4. Dispositif de commande selon la revendication 3, **caractérisé en ce que** ledit élément fileté (51) comprend un profil rainuré externe (61) au niveau de ladite première partie radialement externe (55) et ladite douille (52) comprend un profil rainuré interne (62) au niveau de ladite seconde partie radialement interne (58) ; ledit profil rainuré externe (61) et ledit profil rainuré interne (62) étant couplés ensemble et définissant ledit couplage de forme (60).

5. Dispositif de commande selon la revendication 4, **caractérisé en ce que** ledit profil rainuré externe (61) et ledit profil rainuré interne (62) comprennent chacun un nombre impair de dents (64, 65).

6. Dispositif de commande selon la revendication 4 ou 5, **caractérisé en ce que** ledit profil rainuré externe (61) et ledit profil rainuré interne (62) ont des extensions axiales respectives parallèles audit premier axe (A) ;
ladite douille (52) exerçant, à l'usage, une action de contraste sur ledit élément fileté (51) ;
ladite action de contraste étant une résultante de forces et/ou de moments ayant une direction opposée à la rotation de l'élément fileté (51) autour dudit premier axe (A) et ayant un module proportionnel auxdites extensions axiales.

7. Dispositif de commande selon l'une quelconque des revendications 2 à 6, **caractérisé en ce que** lesdits seconds moyens de raccordement (70) comprennent un couplage de forme supplémentaire (70).

8. Dispositif de commande selon la revendication 7, **caractérisé en ce que** ladite tige de commande (10) comprend un premier profil polygonal (71, 71') et ladite douille (52) comprend un second profil polygonal (72, 72') avec une forme correspondant audit premier profil polygonal (71, 71') ;
ledit premier profil polygonal (71, 71') et ledit second profil polygonal (72, 72') étant couplés ensemble et définit ledit couplage de forme supplémentaire (70).

9. Dispositif de commande selon l'une quelconque des revendications précédentes, **caractérisé en ce que** ledit élément déformable filiforme (85) est réalisé avec un matériau métallique.

10. Dispositif de commande selon l'une quelconque des revendications précédentes, **caractérisé en ce que** ledit élément fileté (51) n'est pas du type auto-freinant.

11. Dispositif de commande selon l'une quelconque les revendications précédentes, **caractérisé en ce qu'**il comprend une rondelle (100), qui est montée autour de ladite tige de commande (10) et est intercalée entre ledit palier à roulement (17) et ledit élément fileté (51) parallèlement audit premier axe (A).

12. Rotor anti-couple (4) pour un aéronef (1) capable d'effectuer un vol stationnaire, comprenant :
un arbre (6) pouvant tourner autour d'un premier axe (A) ;
une pluralité de pales (8) articulées sur ledit arbre (6), s'étendant le long des seconds axes (B) respectifs transversaux par rapport audit premier axe (A) et pouvant tourner autour desdits seconds axes (B) respectifs afin de modifier des angles d'attaque respectifs ; et
un dispositif de commande (50) selon l'une quelconque des revendications précédentes.

13. Aéronef (1) capable d'effectuer un vol stationnaire, en particulier un hélicoptère (1), comprenant :
un fuselage (2) ;
un rotor principal (3) ; et
un rotor anti-couple (4) selon la revendication 12.
